# EUROPEAN PATENT APPLICATION

(11) **EP 4 606 779 A1**
(43) Date of publication of application: **27.08.2025**
(21) Application number: 23810115.8
(22) Date of filing: 13.10.2023
(51) Int. Cl.: C03C 3/066, B41J 2/00, C03C 3/089, C03C 8/02, C03C 8/04, C03C 8/14, C03C 8/22, C03C 17/00, C03C 17/04, C09D 11/30

(54) **INK TO COMPENSATE FOR THE MELTING POINT OF CERAMIC INKS USED IN GLASS DECORATION, SYSTEM AND METHOD USED FOR ITS APPLICATION**

(30) Priority: 17.10.2022 ES 202230888
(71) Applicant: Tecglass SL, 36500 Lalin (Pontevedra) (ES)
(72) Inventor: FERNÁNDEZ VÁZQUEZ, Juan Javier, 36500 Lalin (Pontevedra) (ES); BARROS LÓPEZ, José Manuel, 36500 Lalin (Pontevedra) (ES)
(74) Representative: Pons IP
(86) International application number: PCT/ES2023/070604
(87) International publication number: WO 2024/084117

(57) **Abstract**

Compensating ink in which a main ink based on Bismuth Oxide is used which has a percentage composition by weight of:
• 30-50% SiO2
• 20-40% Bi2O3
• 3-20% B2O3
• 10-20% ceramic black pigment

Wherein the compensating ink has a composition of:
• 5-10% SiO2
• 65-75% Bi2O3
• 2-7 % of ZnO
• 3-20% B2O3
• 0.2-15% ceramic black pigment

The system employs a dual-colour head or two heads and the method performs a dynamic adjustment of the mixing percentages of the main and compensating ink according to glass size, thickness and painted surface.

## Description

### OBJECT OF THE INVENTION

As the title of the invention states the object of this invention is an ink compensating the melting point of ceramic inks used in glass decoration, also object of the invention is the system employed in its application, as well as the method employed for its application.

The present invention is characterised by the special composition of the additional ink used as a means of compensating the melting point of the main ink. The system is characterised by two heads in parallel, or one dual-colour head. On the other hand, the method used in the application of the compensating ink allows an adjustment of the melting point depending on parameters such as the size of the glass and percentage of the glass to be printed.

Therefore, the present invention is confined within the scope of the inks and the procedures involved in printing glass.

### BACKGROUND OF THE INVENTION

In the industry of glass decoration with ceramic inks, the need for adjustment of the melting temperature of glazes is well known. This melting temperature must be adjusted to achieve the correct vitrification under different melting conditions.

This is especially necessary in the decoration of automotive glass, where the glass has to be curved and it is in this curving process that the ink is also vitrified.

This bending may not always take place at the same temperature since a large glass (1,300 mm x 1,900 mm) may require a very different bending temperature than a small glass (1,000 mm x 1,300 mm).

This means that nowadays with screen printing decoration methods what is done is to have 3 or more enamels with different types of melting points and in the factory the operators, based on their experience, mix these enamels to have different melting points.

Digital printing technology also does the same thing, but in this case, having to mix the enamels, then having to wash the printer to load the new one and so on, makes it almost infeasible due to operating costs and downtime to do this process.

In screen printing it is much simpler because you only have to wash the screen and put the new mixture on it and print.

The ideal would be to be able to use digital printing technology that provides flexibility and much greater versatility in production, but without having the downtime to wash and change enamel, which is what limits it.

Therefore, it is the object of the present invention to overcome the drawbacks of the state of the art, in particular, to be able to use digital printing technology without having to stop the printer to reload, by developing both a melting point compensating ink and a printing system and method as hereinafter described and set forth in essence in the first claim.

### DESCRIPTION OF THE INVENTION

The object of the present invention is essentially contained in the independent claim and the different embodiments are contained in the dependent claims. The object of the present invention is an ink which seeks to compensate for the melting point of the main ceramic inks used in glass decoration, henceforth referred to as a compensating ink which is based on the composition of the main ink but incorporating the most fusible elements.

The main ink is made with the highest melting point necessary for the process, but is not the subject of the patent as there are already many inks or glazes known in the prior art. For example, a typical composition of a main ink based on Bismuth Oxide would be:
- 30-50% SiO2
- 20-40% Bi2O3
- 3-20% B2O3
- 10-20% ceramic black pigment

A typical composition of a main ink based on Zinc oxide would be:
- 35-50 % SiO2
- 15-25 % of ZnO
- 12-22 % B2O3
- 10-20 % ceramic black pigment
- 10-15 % Na2O

A main ink composition based on a mixture of Bismuth Oxide and Zinc Oxide would be:
Example of main ink mixture Bismuth and Zinc 3CP
- 40-50% SiO2
- 5-7 % Na2O
- 2-3 % of K2O
- 8-10 % of ZnO
- 10-20% Bi2O3
- 10-20 % B2O3
- 10-20% ceramic black pigment

Based on these two typical frit compositions, the compensating ink is developed for each case on the basis of the main one.

For example, if we start from the main ink based on bismuth oxide, the compensating ink has a composition of:
- 5-10% SiO2
- 65-75% Bi2O3
- 2-7 % of ZnO
- 3-20% B2O3
- 0.2-15% ceramic black pigment

For example, if we start from the main ink based on Zinc oxide, the compensating ink has a composition of:
- 5-10% SiO2
- 10-15 % Na2O
- 30-40 % of ZnO
- 30-40 % B2O3
- 0.2-15% ceramic black pigment

Now, if we start from the main ink based on a mixture of Bismuth Oxide and Zinc Oxide, the compensating ink has a composition of:
- 10-20% SiO2
- 7-10% Na2O
- 2-3 % of K2O
- 10-13 % of ZnO
- 15-25% Bi2O3
- 10-20 % B2O3
- 0.2-5% LiO2
- 0.2-15% ceramic black pigment

The compensating ink described above is the subject of a patent because although they are known oxide compositions in the proportions described they would never work by themselves because they do not meet the needs of industry, do not resist scratching and have no chemical resistance.

Once we have loaded the main ink and the compensating ink in the print head, we can print the percentage of each of them that we are interested in to achieve the desired and optimum melting point.

With this invention not only is it possible to eliminate the need to mix the glaze prior to printing, but also the great advantage is that the ability to adjust the melting point is increased exponentially because in the current system for practicality 3 or 4 glazes are mixed and in this system almost infinite mixing ratios can be achieved, for example:

| Main enamel 1 | Compensating enamel |
|---|---|
| 99.99 | 0.01 |
| 99.98 | 0.02 |
| 99.97 | 0.03 |
| 99.96 | 0.04 |

| Intermediate percentages | Intermediate percentages |
|---|---|
| 19.99 | 80.01 |
| 19.96 | 80.04 |
| 19.95 | 80.05 |
| 0.1 | 99.99 |

The method used in the application of the compensating ink allows dynamic compensation of the melting point. This occurs as follows:
The optimum melting point always varies depending on the size of the piece due to the parameters of the firing furnaces available to the customer and also based on the printing surface on each glass (a glass with 20% of the surface painted needs a lower melting point than one that has 50% of the surface painted. We know the firing recipe that the customer uses for the glass we are printing, we know the size of the glass from the print file and we know perfectly the % of surface that will be printed and in this way we can build tables and work recipes that automatically compensate the melting point depending on the glass that comes to the printer and the painted surface it has

### Example of a table:

| Tamaño de vidrio en mm | Espesar de vidrio en mm | Superfice pintada | Porcentaje de tinta compensadora |
|---|---|---|---|
| 1300 x 1900 | 1,6 | 20% | 20,80% |
| 1290 x 1850 | 1,6 | 18% | 22,30% |
| 1260 x 1700 | 1,6 | 40% | 20,30% |

One could also use the printing method and system described using 2 inks of different melting points known in the state of the art, in which case the melting points of each of the inks are analysed and the necessary mixing tables are made.

Unless indicated otherwise, all the technical and scientific elements used in this specification have the meaning usually understood by a person skilled in the art to which this invention belongs. In the practice of this invention, procedures and materials similar or equivalent to those described in the specification can be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### PREFERRED EMBODIMENT OF THE INVENTION

In the preferred embodiment of the invention, the main ink is an ink based on Bismuth Oxide, without prejudice to being able to use as main ink an ink based on Zinc Oxide or a mixture of Bismuth Oxide and Zinc Oxide, which could be the subject of divisional applications.

The composition of a main ink based on Bismuth Oxide is:
- 30-50% SiO2
- 20-40% Bi2O3
- 3-20% B2O3
- 10-20% ceramic black pigment

Wherein the compensating ink has a composition of:
- 5-10% SiO2
- 65-75% Bi2O3
- 2-7 % of ZnO
- 3-20% B2O3
- 0.2-15% ceramic black pigment
where the amounts of SiO2 and and the ceramic black pigment, the latter in smaller proportion, are those that are reduced in their percentage composition to achieve a lower melting temperature, while those of Bi2O3 are increased to also achieve a lower melting temperature.

On the other hand, also an object of the present invention and preferred embodiment is the system employed for the application of a compensating ink, wherein the system uses a 2-colour head or 2 1-colour heads in parallel such that:
a. In the case of a dual colour head
   i. Main ink is loaded into channel A of head 1
   ii. Compensating ink is loaded in channel B of head 1
b. In case of two heads in parallel
   i. Main ink is loaded in head 1
   ii. Compensating ink is loaded in head 2

On the other hand, together with the composition of the compensating ink and the system employed, also an object of the present invention is the procedure for applying the compensating ink using the above-described system in which the mixing percentages are dynamically changed on the basis of different variable parameters which can be defined as:
i. Glass size
ii. Glass thickness
iii. Painted surface
iv. Whether it is for bending or for flat vitrification
v. If the glass is normal or with a low emissivity coating
vi. Different parameters that can be added
vii. based on the type of firing done by the user, e.g. gas oven, convection, static oven,
wherein the adjustment of the melting temperature takes place in the amounts of SiO2, and of the ceramic black pigment, reducing them downwards to achieve a lower melting temperature, wherein the reduction of the ceramic black pigment is limited by the pigmentation function itself, while the amount of Bi2O3 is increased to also achieve a lower melting temperature.

That is to say, the adjustment that is carried out depends on all the indicated parameters, making an adjustment in the composition of the compensating ink in order to achieve better melting.

Both the system described and the method just described are applicable to the compensating inks explained on the basis of the main inks based on Bismuth Oxide or based on Zinc Oxide, or based on a mixture of both.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Ink compensating the melting point of ceramic inks used in glass decoration, system and method used for its application wherein a main ink based on Bismuth Oxide is used which has a percentage composition by weight of:
• 30-50% SiO2
• 20-40% Bi2O3
• 3-20% B2O3
• 10-20% ceramic black pigment
**Characterised in that** the compensating ink has a composition of:
• 5-10% SiO2
• 65-75% Bi2O3
• 2-7 % of ZnO
• 3-20% B2O3
• 0.2-15% ceramic black pigment
where the amounts of SiO2 and the ceramic black pigment, the latter in smaller proportion, are the ones that are reduced in their percentage composition to achieve a lower melting temperature, while the amount of Bi2O3 is increased to also achieve a lower melting temperature.

2. A system used for the application of a melting point compensating ink according to claim 1 **characterised in that** the system uses a 2-colour head or 2 1-colour heads in parallel such that:
• a. In case of using a dual colour head
o i. Main ink is loaded into channel A of head 1
o ii. Compensating ink is loaded in channel B of head 1
• b. In case of using two heads in parallel
o i. Main ink is loaded in head 1
o ii. Compensating ink is loaded in head 2

3. Application procedure of a melting point compensating ink according to claim 1 and the system of claim 2 **characterized in that** in the application process the mixing percentages are dynamically changed on the basis of different variable parameters that can be defined as:
• i. Glass size
• ii. Glass thickness
• iii. Painted surface
• iv. Whether it is for bending or for flat vitrification
• v. If the glass is normal or with a low emissivity coating
• vi. Different parameters that can be added
• vii based on the type of firing done by the user, e.g. gas oven, convection, static oven,
wherein the adjustment of the melting temperature takes place in the amounts of SiO2, and of the ceramic black pigment, reducing them downwards to achieve a lower melting temperature, wherein the reduction of the ceramic black pigment is limited by the pigmentation function itself, while the amount of Bi2O3 is increased to also achieve a lower melting temperature.

## Amended claims

### Amended claims under Art. 19.1 PCT

1. Compensating ink of the melting point of ceramic inks used in glass decoration, system and method used for its application wherein a main ink based on Bismuth Oxide is used which has a percentage composition by weight of:
• 30-50% SiO2
• 20-40% Bi2O3
• 3-20% B2O3
• 10-20% ceramic black pigment
**Characterised in that** it also comprise an ink for adjusting a melting point which has a composition of:
• 5-10% SiO2
• 65-75% Bi2O3
• 2-7 % of ZnO
• 3-20% B2O3
• 0.2-15% ceramic black pigment
where the amounts of SiO2 and the ceramic black pigment, the latter in smaller proportion, are the ones that are reduced in their percentage composition to achieve a lower melting temperature, while the amount of Bi2O3 is increased to also achieve a lower melting temperature.

2. Application procedure of a compensating ink of the melting point according to claim 1 wherein the compensating ink comprises a main ink and a ink for adjusting the melting point **characterized in that** in the application process the mixing percentages are dynamically changed on the basis of different variable parameters that can be defined as:
• i. Glass size
• ii. Glass thickness
• iii. Painted surface
• iv. Whether it is for bending or for flat vitrification
• v. If the glass is normal or with a low emissivity coating
• vi. Different parameters that can be added
• vii based on the type of firing done by the user, e.g. gas oven, convection, static oven,
wherein the adjustment of the melting temperature takes place in the amounts of SiO2, and of the ceramic black pigment of the ink for adjusting the melting point, reducing them downwards to achieve a lower melting temperature, wherein the reduction of the ceramic black pigment is limited by the pigmentation function itself, while the amount of Bi2O3 is increased to also achieve a lower melting temperature.
